**Europäisches Patentamt**

**European Patent Office**

**Office européen des brevets**

(11) Veröffentlichungsnummer : **0 056 607
B1**

# EUROPÄISCHE PATENTSCHRIFT

(45) Veröffentlichungstag der Patentschrift :
05.06.85

(51) Int. Cl.⁴ : **A 23 G   3/20, B 23 Q   7/03**

(21) Anmeldenummer : **82100174.0**

(22) Anmeldetag : **12.01.82**

(54) **Vorrichtung zur Herstellung hohler Süsswarenteile.**

(30) Priorität : 19.01.81 DE 3101442

(43) Veröffentlichungstag der Anmeldung :
28.07.82 Patentblatt 82/30

(45) Bekanntmachung des Hinweises auf die Patenterteilung : 05.06.85 Patentblatt 85/23

(84) Benannte Vertragsstaaten :
**AT BE CH DE FR GB IT LI NL SE**

(56) Entgegenhaltungen :
DE-A- 1 955 056
DE-A- 2 430 639
DE-C-   507 473
FR-A- 2 248 792
FR-A- 2 262 916
FR-A- 2 466 200
US-A- 1 417 446
US-A- 2 595 308
US-A- 2 745 374
US-A- 2 796 033
US-A- 2 946 689
US-A- 3 572 256

(73) Patentinhaber : **AUGUST STORCK KG
Paulinenweg 12 Postfach 15 40
D-4802 Halle/Westfalen (DE)**

(72) Erfinder : **Adolf, Lutz-Erdmut
Am Brodhagen 100a
D-4800 Bielefeld 1 (DE)**
Erfinder : **Oberwelland, Klaus
Brockhagener Strasse 36
D-4803 Steinhagen (DE)**

(74) Vertreter : **Patentanwälte TER MEER - MÜLLER -
STEINMEISTER
Artur-Ladebeck-Strasse 51
D-4800 Bielefeld 1 (DE)**

**Beschreibung**

Die Erfindung betrifft eine Vorrichtung zur Herstellung hohler Süsswarenteile mit Hilfe einer Vielzahl von hintereinander und nebeneinander auf einer Fördereinrichtung angeordneten, schalenförmigen, oben offenen Schleuderformen, die mit Hilfe von Zufuhreinrichtungen von oben mit Süsswaren- und ggf. Füllmassen zu beschicken und zeitweise durch einen Antrieb um eine senkrechte Achse in Drehung zu versetzen sind, welcher Antrieb mit nach unten verlängerten Antriebszapfen der Schleuderformen in Eingriff tritt.

Eine derartige Vorrichtung ist aus der DE-C-1 955 056 der Anmelderin bekannt. Bei der bekannten Vorrichtung erfolgt der Antrieb durch drehbare Kupplungsglieder, die von unterhalb der Förderebene gegen die unteren Antriebszapfen der Schleuderformen zeitweilig anhebbar sind. Die Position der Kupplungsglieder und deren Hub müssen verhältnismäßig genau eingestellt werden, damit die Kupplungsglieder die Antriebsglieder der Schleuderformen in den vorgesehenen Haltepositionen der schrittweise vorgerückten Fördereinrichtung genau erfassen. Bei einer Fördereinrichtung mit mehreren nebeneinanderliegenden Reihen von Schleuderformen muß für jede Reihe wenigstens ein gesondertes Kupplungsglied vorgesehen sein, und alle Kupplungsglieder müssen durch Zahnradgetriebe od. dgl. untereinander und/oder mit einem zentralen Antriebsmotor verbunden werden. Zusätzlich muß ein weiterer Antrieb vorgesehen werden, der die Kupplungsglieder taktweise anhebt und absenkt. Dieser Antriebsmechanismus ist aufwendig und entsprechend störanfällig, zumal bei einer im Dauerbetrieb laufenden Anlage durch unvermeidlichen Verschleiß Positionsverschiebungen der Antriebsglieder, Kupplungsglieder etc. auftreten können.

Aus den US-A-2 745 374, 2 946 689 und 2 958 308 sind Vorrichtungen zum Überziehen von Äpfeln mit Karamel bekannt, bei denen zunächst eine langsame Drehbewegung der Äpfel in einem Karamel-Bad und sodann eine Erhöhung der Drehzahl zum Abschleudern überschüssigen Karamels erfolgt. An die Schnelligkeit und Drehzahlgenauigkeit der Rotationsbewegung müssen offenbar nur geringe Anforderungen gestellt werden. Der Drehantrieb erfolgt dadurch, daß Schäfte von Halterungen, die zur Aufnahme jedes einzelnen Apfels vorgesehen sind, während ihrer linearen Bewegung über feststehende Schienen oder angetriebene Riemen laufen und durch diese in Drehung versetzt werden.

Der Erfindung liegt die Aufgabe zugrunde, eine Vorrichtung der eingangs genannten Art derart auszubilden, daß sie einen verhältnismäßig einfachen Antrieb der Schleuderformen bei kontinuierlich laufender Fördereinrichtung gestattet.

Diese Aufgabe wird erfindungsgemäß dadurch gelöst, daß der Antrieb ein in einer seitlich der Antriebszapfen liegenden, ortsfesten Bahn bewegliches Antriebsglied umfaßt, das während der Bewegung der Fördereinrichtung nacheinander gleichzeitig mit den Antriebszapfen zweier nebeneinanderliegender Reihen von Schleuderformen in Reibeingriff tritt.

Ein derartiger Antrieb ermöglicht es in verhältnismäßig einfacher Weise, eine verhältnismäßig rasche und in ihrer Drehzahl exakt einzuhaltende Drehbewegung durchzuführen, die die Herstellung eines Hohlkörpers mit genau festgelegter Wandstärke und Form gestattet. Die gesamte Anlage kann kontinuierlich und ohne Unterbrechung der Förderbewegung durch Einkupplung der Drehantriebe betrieben werden. Jeweils zwei Schleuderformen können durch ein Antriebsglied in Drehung versetzt werden, so daß die Gesamtzahl der Antriebsglieder verringert werden kann.

Weitere Merkmale der Erfindung ergeben sich aus den Unteransprüchen.

Im Folgenden werden bevorzugte Ausführungsbeispiele der Erfindung anhand der beigefügten Zeichnung näher erläutert.

Figur 1 zeigt in schematischer Form eine Gesamtdarstellung der erfindungsgemäßen Vorrichtung ;

Figur 2 veranschaulicht ein Ausführungsbeispiel des erfindungsgemäßen Antriebs der Schleuderformen ;

Figur 3 stellt ein anderes Ausführungsbeispiel dar ;

Figuren 4 und 5 zeigen eine Abwandlung der Ausführungsform gemäß Fig. 3 in zwei Betriebsstellungen ;

Figur 6 zeigt in einer vergrößerten Schnittdarstellung Einzelheiten der Ausführungsform gemäß Fig. 2.

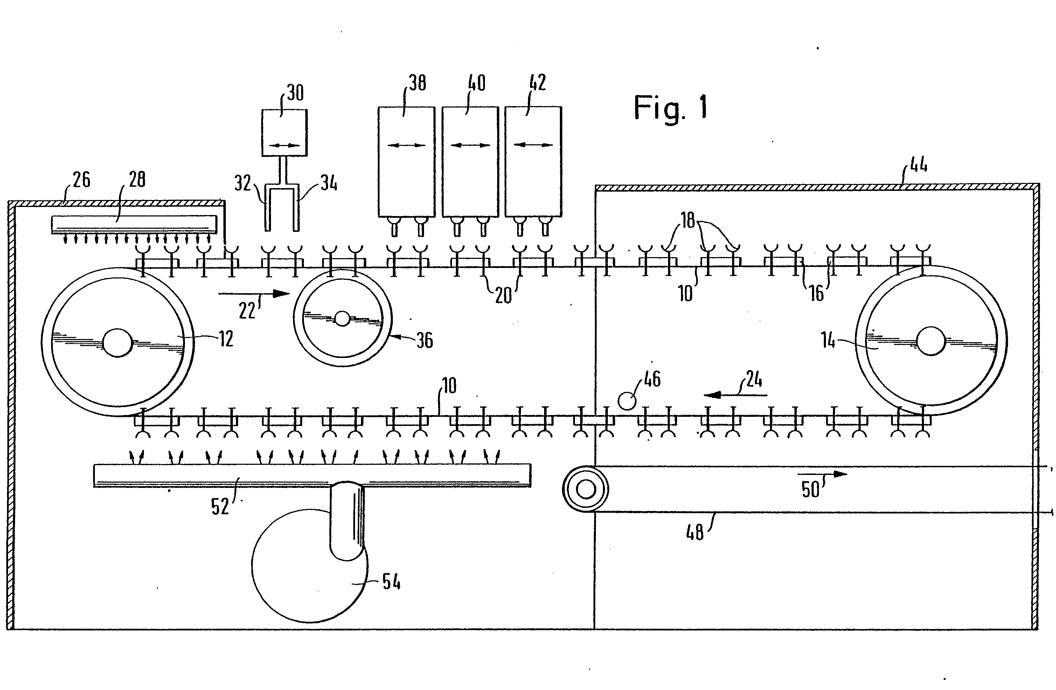

Zunächst soll anhand von Fig. 1 die erfindungsgemäße Vorrichtung in ihrer Gesamtheit beschrieben werden. Eine Fördereinrichtung in der Form einer endlosen Förderkette 10 läuft um zwei in waagerechten Achsen gelagerte Antriebstrommeln 12 und 14 um. Die Förderkette 10 trägt in quer zur Förderrichtung verlaufenden Trägerleisten 16 zwei in Förderrichtung hintereinander liegende, quer über die Förderkette verlaufende Reihen von Schleuderformen 18, die in den Trägerleisten 16 drehbar gelagert und durch die Trägerleisten hindurch durch Antriebszapfen 20 verlängert sind, die an der Unterseite der Trägerleisten aus diesen herausragen. Die Bewegungsrichtung der Förderkette ist im dargestellten Beispiel durch Pfeile 22, 24 angedeutet.

Das obere Trum der Förderkette 10 verläßt die Antriebstrommel 12 innerhalb eines Gehäuses 26, innerhalb dessen sich über der Bahn der Schleuderformen eine Düsenanordnung 28 zur Abgabe von Warmluft und damit zum Vorwärmen der Schleuderformen 18 befindet.

In Förderrichtung anschließend befindet sich über der Förderkette 10 eine Zufuhreinrichtung 30 für eine fließfähige Süßwarenmasse, beispielsweise Hartzuckermasse, die Fülldüsen 32, 34 für zwei hintereinander liegende Reihen von Schleuderformen 18 aufweist. Die Zufuhreinrichtung 30 bewegt sich hin- und hergehend entsprechend dem nicht näher bezeichneten Doppelpfeil, so daß sie jeweils über eine Teilstrecke während des Füllvorganges der Bewegung der Förderkette folgt.

Unterhalb der Zufuhreinrichtung 30 oder in einer in Förderrichtung stromabwärts liegenden Position befindet sich ein insgesamt mit 36 bezeichneter Antrieb, durch den die Schleuderformen zeitweilig in Drehung versetzt werden. Auf den Antrieb soll später näher eingegangen werden. Durch die Drehung wird die Süßwarenmasse schalenförmig an der Innenwand der Schleuderformen verteilt, so daß sie beim Abkühlen in einer Schalenform erstarrt. Die Position des Antriebs 36 in bezug auf die Zufuhreinrichtung 30 ist vorzugsweise verstellbar, so daß der Beginn des Schleudervorganges dem Erstarrungsverhalten der Süßwarenmasse angepaßt werden kann. Ebenso ist in geeigneter Weise die Zeitdauer des Antriebseingriffs entsprechend dem Erstarrungsverhalten einstellbar.

Anschließend an den Antrieb 36 sind oberhalb der Förderkette Zufuhreinrichtungen 38, 40, 42 vorgesehen, die sich ebenfalls hin- und hergehend bewegen und somit über eine Teilstrecke der Bahn der Förderkette 10 folgen. Diese Zufuhreinrichtungen dienen zum Einbringen von geeigneten Füll- und Verschlußmassen in der Form von fließfähigen Massen oder festen Produkten wie Haselnüssen, Kirschen, Rosinen etc.

Anschließend tritt die Förderkette 10 in ein weiteres Gehäuse 44 ein, in dem sich die Schleuderformen 18 mit der Förderkette 10 um die Antriebstrommel 14 herum zum unteren Trum der Förderkette bewegen. Innerhalb des Gehäuses 44 kann eine Kühlstrecke ausgebildet sein, durch die die endgültige Erstarrung der Süßwarenprodukte gefördert wird. Mit 46 ist eine schematisch angedeutete Entleerungsvorrichtung bezeichnet, die beispielsweise mit nicht gezeigten Auswurfstößeln zusammenwirkt, die in die Schleuderformen integriert sind. Auf diese Weise werden die fertigen Süßwarenprodukte auf einen Austragförderer 48 ausgeworfen, der in Richtung des Pfeiles 50 aus dem Gehäuse 44 austritt. Im Endbereich des unteren Trums befindet sich eine weitere Düsenanordnung 52, die durch ein Gebläse 54 mit Warmluft versorgt wird und die Schleuderformen vorerwärmt.

Für weitere Einzelheiten dieser Vorrichtung wird auf die zuvor erwähnte DE-PS 1 955 056 der Anmelderin bezug genommen.

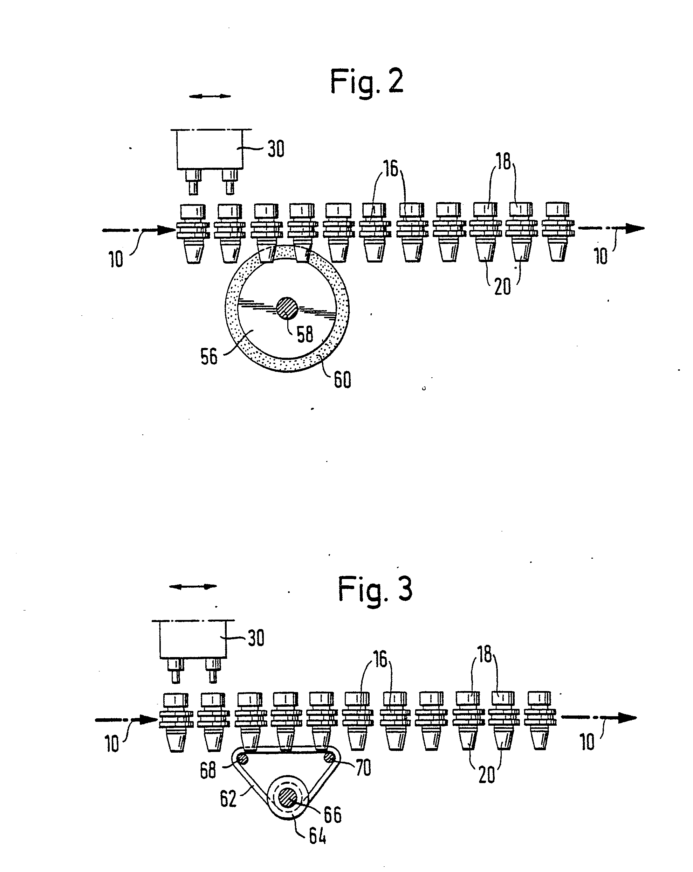

Fig. 2 zeigt in einer schematischen Darstellung einen Ausschnitt aus der Vorrichtung der Fig. 1 mit einem erfindungsgemäßen Antrieb für die Schleuderformen. Die Schleuderformen 18 sind gemäß Fig. 2 wiederum in quer über die Förderbahn verlaufenden Trägerleisten 16 drehbar gelagert und weisen an ihren unteren Enden Antriebszapfen 20 auf, die in diesem Falle kegelstumpfförmig ausgebildet sind. Oberhalb der Bahn der Förderkette 10 ist wiederum die Zufuhreinrichtung 30 angedeutet.

Zur zeitweiligen Drehung der Schleuderformen 18 ist unerhalb der Bahn der Förderkette ein Reibrad 56 vorgesehen, das mit einer waagerechten, quer zu der Förderkette 10 und unter dieser verlaufenden Welle 58 drehbar ist. Das Reibrad 56 weist eine abgeschrägte Randfläche 60 auf, deren Schrägungswinkel der konischen Abschrägung der Antriebszapfen 20 angepaßt ist. Die Drehebene des Reibrades 56 liegt seitlich neben der Bewegungsbahn der Antriebszapfen, und zwar in einer Position, in der ein Reibeingriff zwischen den Antriebszapfen und dem Reibrad gewährleistet ist. Die Randfläche 60 und/oder die Antriebszapfen 20 können mit einem Reibbelag, ggf. auch einem elastischen Reibbelag aus Gummi oder dgl. versehen sein, der einen sicheren Eingriff gestattet. Ggf. können die Antriebsteile auch elastisch gelagert sein.

Im übrigen besteht die Möglichkeit, jeweils ein Reibrad 56 in nicht gezeigter Weise zwischen zwei nebeneinander liegenden Reihen von Schleuderformen derart anzuordnen, daß ein Reibrad mit den Antriebszapfen beider Reihen zusammenwirkt.

Eine andere Ausführungsform des Antriebs der Schleuderformen ist in Fig. 3 gezeigt. Anstelle des Reibrades 56 ist ein endloser Treibriemen 62 vorgesehen, der um eine Riemenscheibe 64 umläuft, die auf einer Welle 66 befestigt ist, die wiederum waagerecht und quer unterhalb der Förderkette 10 angeordnet ist. Im weiteren Verlauf bewegt sich der Treibriemen 62 um Umlenkrollen 68 und 70, die wiederum eine Bahn definieren, die seitlich neben der Bewegungsbahn einer längsgerichteten Reihe von Schleuderformen 18 bzw. Antriebszapfen 20 liegt. Über die Länge der zwischen den Umlenkrollen 68 und 70 liegenden Strecke treten daher die Antriebszapfen 20 mit dem Treibriemen 62 in Eingriff. Auch in diesem Fall kann der Treibriemen 62 derart ausgebildet und angeordnet sein, daß er mit zwei benachbarten Reihen von Antriebszapfen zusammenwirkt.

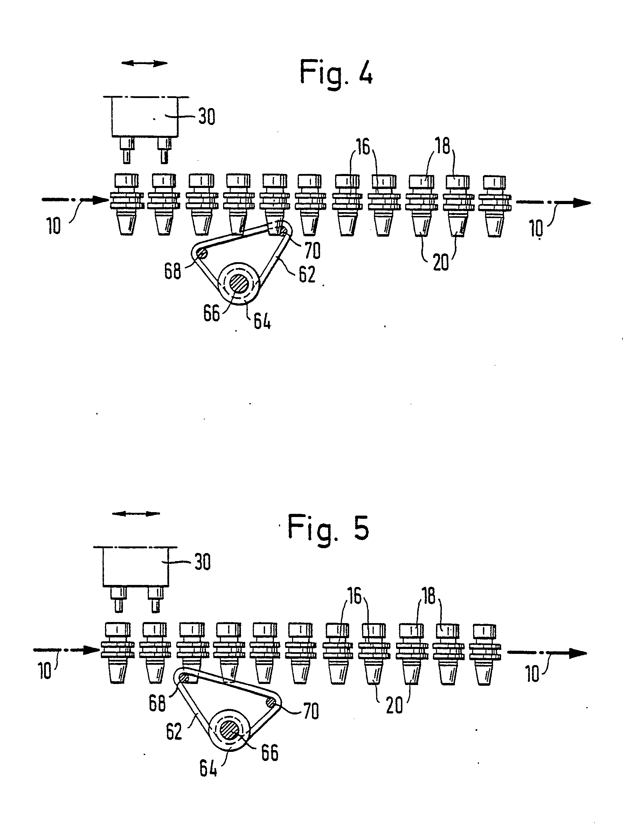

In Figur 4 und 5 sind weitere Ausführungsformen der Erfindung gezeigt, die eine Abwandlung gegenüber der Ausführungsform der Figur 3 darstellen. Im Falle der Figur 4 liegen die Achsen der Umlenkrollen 68 und 70 auf unterschiedlichen Höhen, so daß sich die Achse der Umlenkrollen 70 oberhalb derjenigen der Umlenkrollen 68 befindet. Auf diese Weise treten die Antriebszapfen 20 zunächst mit ihren unteren Enden geringeren Durchmessers mit dem Treibriemen 62 in Eingriff, so daß die Schleuderformen auf eine verhältnismäßig hohe Drehzahl gebracht werden, die sich langsam verringert, wenn der Treibriemen 62 nach und nach mit dem oberen, im Durchmesser größeren Bereich der Antriebszapfen 20 in Eingriff gelangt. Bei der Ausführungsform gemäß Figur 5 erfaßt der Treibriemen 62 zunächst den oberen, im Durchmesser dickeren Bereich der Antriebszapfen 20, und während der weiteren Förderbewegung nach und nach den unteren, dünneren Bereich. Dadurch ergibt sich in entsprechender Weise eine zunehmende Beschleunigung der Drehbewegung. Beide Variationsmöglichkeiten können unter bestimmten Umständen sinnvoll sein, wenn es als zweckmäßig angesehen wird, die Drehzahl der Schleuderformen während des Schleudervorganges zu ändern, um beispielsweise beim Beginn des Schleuderns ein Überlaufen der zunächst verhältnismäßig dünnflüssigen Füllmenge zu verhindern, im weiteren Verlauf jedoch zur Erzielung einer gleichmäßigen Wandstärke die Drehzahl zu steigern.

Der Antrieb gemäß Figur 3 bis 5 gestattet im übrigen auch eine Verlängerung oder Verkürzung der Schleuderzeit durch Veränderung des Abstandes zwischen den Umlenkrollen 68 und 70.

Im übrigen können die Achsen der Umlenkrollen 68 und 70 gemäß Figur 3 auch senkrecht, und nicht in der gezeigten Weise waagerecht angeordnet sein, so daß der Treibriemen 62 in einer waagerechten Ebene um diesen umläuft, sofern die Platzverhältnisse dieses gestatten.

Neben den beschriebenen Antriebsorganen können anders geformte, ständig in Bewegung befindliche Antriebsorgane verwendet werden, die über einen Teilbereich der Förderstrecke mit den Antriebszapfen in Reibeingriff treten.

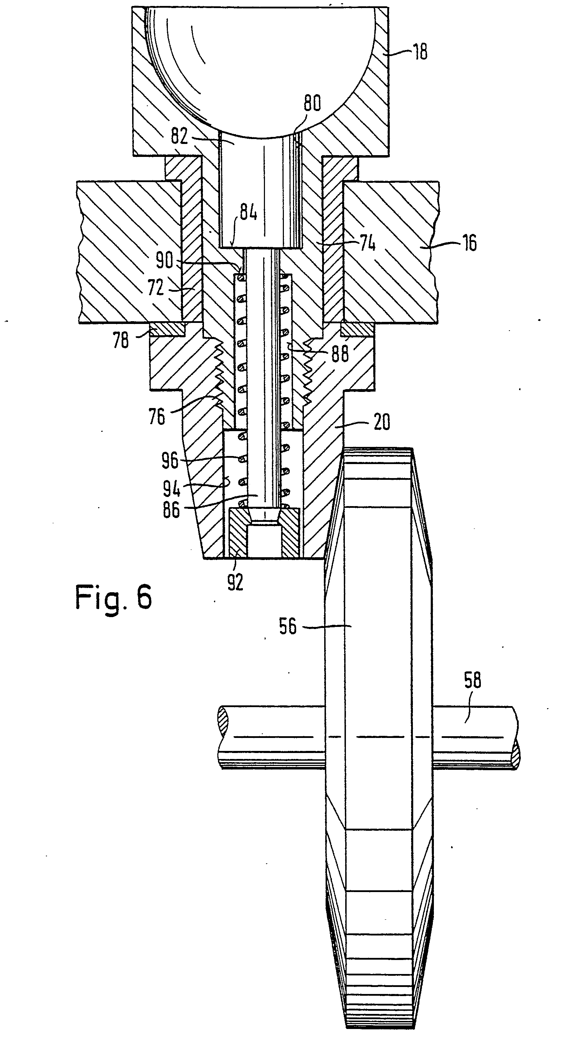

Figur 6 zeigt in einem senkrechten Schnitt eine einzelne Schleuderform 18 mit einem kegelförmigen Antriebszapfen 20 und einem diesem zugeordneten Reibrad 56. Die Schleuderform 18 ist im wesentlichen zylindrisch ausgebildet und weist an der oberen Seite eine im wesentlichen halbkreisförmige, nicht näher bezeichnete Ausnehmung auf, in die das zu schleudernde Süßwarenmaterial eingefüllt wird.

Eine Lagerhülse 72 ist in einer Bohrung der Trägerleiste 16 der insgesamt nicht gezeigten Förderkette 10 angeordnet und nimmt einen nach unten ragenden, in seinem Durchmesser gegenüber dem oberen Bereich der Schleuderform 18 verjüngten Schaft 74 drehbar auf. Der Antriebszapfen 20 ist mit Hilfe eines Gewindes 76 auf das untere Ende des Schaftes 74 aufgeschraubt und stützt sich über eine Lagerscheibe 78 an der Unterseite der Trägerleiste 16 ab. Im Boden der Schleuderform 18 befindet sich eine senkrechte Mittelbohrung 80, in der ein Auswerferkopf 82 senkrecht verschiebbar angeordnet ist. In der in Fig. 6 gezeigten unteren Endstellung paßt sich die obere Oberfläche des Auswerferkopfes 82 der Form der halbkugelförmigen Ausnehmung der Schleuderform 18 an. In dieser unteren Endstellung liegt das untere Ende des Auswerferkopfes 82 an einer unteren Schulter 84 der Bohrung 80 an.

Das untere Ende des Auswerferkopfes 82 ist nach unten koaxial durch einen Schaft 86 verlängert, dessen Durchmesser geringer als derjenige des Auswerferkopfes und zugleich geringer als derjenige einer von unten in das untere Ende des Schaftes 74 eintretenden Bohrung 88 ist. Diese Bohrung weist eine obere Schulter 90 auf, die unterhalb der Schulter 84 liegt. Zwischen den Schultern 84 und 90 ist ein nicht näher bezeichneter Bohrungsabschnitt vorgesehen, dessen Durchmesser im wesentlichen dem Außendurchmesser des Schaftes 86 entspricht. Am unteren Ende des Schaftes 86 befindet sich ein zylindrisches Fußstück 92 innerhalb einer von unten in den Antriebszapfen 20 eintretenden Bohrung 94. Zwischen der oberen Oberfläche des Fußstückes 92 und der oberen Schulter 90 der Bohrung 88 ist der Schaft 86 von einer Schraubendruckfeder 96 umgeben, die den Auswerferkopf 82 in die in Fig. 6 gezeigte untere Endstellung vorspannt.

In der in Fig. 1 lediglich angedeuteten Entleerungsvorrichtung 46, in der die Schleuderformen 18 nach unten offen sind, also in der zu Fig. 6 um 180° entgegengesetzten Stellung stehen, wird durch einen nicht gezeigten Entleerungsstößel ein Druck auf das Fußstück 92 des Auswerferkopfes 82 ausgeübt, so daß das fertige Süßwarenteil gelöst und auf den in Fig. 1 gezeigten Austragförderer 48 geworfen wird.

Der Antrieb der in Fig. 6 gezeigten Schleuderform 18 erfolgt mit Hilfe eines schematisch angedeuteten Reibrades 56 gemäß Fig. 2, das sich ständig mit einer Welle 58 dreht.

**Patentansprüche**

1. Vorrichtung zur Herstellung hohler Süßwarenteile mit Hilfe einer Vielzahl von hintereinander und nebeneinander auf einer Fördereinrichtung angeordneten, schalenförmigen, oben offenen Schleuderformen, die mit Hilfe von Zufuhreinrichtungen von oben mit Süßwaren- und gegebenenfalls Füllmassen zu beschicken und zeitweise durch einen Antrieb um eine senkrechte Achse in Drehung zu versetzen sind, welcher Antrieb mit nach unten verlängerten Antriebszapfen der Schleuderformen in Eingriff tritt, dadurch gekennzeichnet, daß der Antrieb (36) ein in einer seitlich der Antriebszapfen (20) liegenden, ortsfesten Bahn bewegliches Antriebsglied (56, 62) umfaßt, das während der Bewegung der Fördereinrichtung (10) nacheinander gleichzeitig mit den Antriebszapfen (20) zweier nebeneinander liegender Reihen von Schleuderformen (18) in Reibeingriff tritt.

2. Vorrichtung nach Anspruch 1, dadurch gekennzeichnet, daß das Antriebsglied ein um eine quer unterhalb der Fördereinrichtung (10) verlaufende Achse drehbares Reibrad (56) ist.

3. Vorrichtung nach Anspruch 1, dadurch gekennzeichnet, daß das Antriebsglied ein endloser Treibriemen (62) mit einem geraden Bahnabschnitt seitlich der Bahn der Antriebszapfen (20) ist.

4. Vorrichtung nach einem der Ansprüche 1 bis 3, dadurch gekennzeichnet, daß die Antriebszapfen (20) nach unten konisch verjüngt sind und daß das Antriebsglied (56, 62) eine dieser Form angepaßte Form aufweist.

5. Vorrichtung nach Anspruch 3 oder 4, dadurch gekennzeichnet, daß der Treibriemen (62) in einer gegen die Waagerechte geneigten, nacheinander Bereiche sich ändernden Durchmessers der Antriebszapfen (20) erfassenden Orientierung angeordnet ist.

6. Vorrichtung nach Anspruch 5, dadurch gekennzeichnet, daß der Treibriemen (62) um in waagerechten Achsen angeordnete Umlenkrollen (68, 70) an den Enden des geraden Bahnabschnitts umläuft, und daß die Achsen der Umlenkrollen verstellbar sind.

## Claims

1. Apparatus for making hollow confectionery articles by means of a plurality of cup-shaped centrifugal moulds having open upper ends and being arranged one after the other and side by side on a conveyor, the centrifugal moulds being adapted to be supplied with confectionery material and — in certain cases — with filling substances by means of feeder devices and to be intermittently rotated about a vertical axis by means of a drive means, the drive means being engageable with downwardly extended drive cogs of the centrifugal moulds, characterized in that the drive means (36) comprises a drive element (56, 62) which is movable along a stationary path arranged laterally of the drive cogs (20) and which successively comes into simultaneous frictional engagement with the drive cogs (20) of two rows of centrifugal moulds (18) arranged side by side, during the movement of the conveyor (10).

2. Apparatus according to claim 1, characterized in that the drive element is a friction wheel (56) rotatable about an axis arranged transversely beneath the conveyor (10).

3. Apparatus according to claim 1, characterized in that the drive element is an endless drive belt (62) having a straight path segment located laterally in relation to the path of the drive cogs (20).

4. Apparatus according to any of the claims 1 to 3, characterized in that the drive cogs (20) are conically tapered toward their lower end and that the drive element (56, 62) has a shape adapted thereto.

5. Apparatus according to claim 3 or 4, characterized in that the drive belt (62) is inclined with respect to the horizontal to successively engage portions of varying diameter of the drive cogs (20).

6. Apparatus according to claim 5, characterized in that the drive belt (62) proceeds around reversing rolls (68, 70) arranged at the ends of the straight path and having horizontal axis, and that the axes of the reversing rolls are adjustable.

## Revendications

1. Dispositif pour réaliser des éléments de confiserie creux à l'aide d'une série de moules centrifuges ouverts vers le haut, en forme de coquilles et disposés les uns à la suite des autres et les uns à côté des autres sur un dispositif transporteur, alimentés par le haut en substances pour confiserie et éventuellement en substances de remplissages par des dispositifs d'alimentation et entraînés temporairement en rotation autour d'un axe vertical par un mécanisme d'entraînement, lequel mécanisme vient en prise avec des tourillons d'entraînement prolongés vers le bas des moules centrifuges, caractérisé en ce que le dispositif d'entraînement (36) comprend un organe d'entraînement (56, 62) mobile le long d'une piste fixe et disposé latéralement par rapport aux tourillons d'entraînement (20), cet organe venant successivement en contact par frottement, pendant le mouvement du dispositif transporteur (10), simultanément avec les tourillons d'entraînement de deux rangées de moules centrifuges disposées côte à côte.

2. Dispositif selon la revendication 1, caractérisé en ce que l'organe d'entraînement est constitué par une roue frotteuse (56) pouvant tourner autour d'un axe disposé transversalement audessous du dispositif transporteur (10).

3. Dispositif selon la revendication 1, caractérisé en ce que l'organe d'entraînement est constitué par une courroie d'entraînement sans fin (62) comportant une section en ligne droite latéralement à la course suivie par les tourillons d'entraînement (20).

4. Dispositif selon l'une quelconque des revendications 1 à 3, caractérisé en ce que les tourillons d'entraînement (20) sont de forme conique allant en diminuant vers le bas et en ce que l'organe d'entraînement (56, 62) à une forme adaptée à cette forme.

5. Dispositif selon la revendication 3 ou 4, caractérisé en ce que la courroie d'entraînement (62) est inclinée par rapport à l'horizontale et coopère avec des régions successives où le diamètre des tourillons d'entraînement (20) se modifie.

6. Dispositif selon la revendication 5, caractérisé en ce que la courroie d'entraînement (62) passe, aux extrémités de la section de la piste en ligne droite, autour de poulies de renvoi (68, 70) qui sont montées sur des axes horizontaux, et en ce que les axes des poulies de renvoi peuvent être réglés.

Fig. 1

# Fig. 2

# Fig. 3

Fig. 4

Fig. 5

Fig. 6